Europäisches Patentamt

**European Patent Office**

**Office européen des brevets**

(11) Publication number : **0 477 162 A1**

# EUROPEAN PATENT APPLICATION

(21) Application number : **91890178.6**

(22) Date of filing : **12.08.91**

(51) Int. Cl.⁵ : **D21C 5/02**

(30) Priority : **28.08.90 US 573976**

(43) Date of publication of application :
**25.03.92 Bulletin 92/13**

(84) Designated Contracting States :
**AT BE CH DE DK ES FR GB GR IT LI LU NL SE**

(71) Applicant : **Kamyr, Inc.**
**Ridge Center**
**Glens Falls New York 12801-3686 (US)**

(72) Inventor : **Chamblee, Wayne**
**Ridge Center**
**Glens Falls, New York 12801-3686 (US)**
Inventor : **Greenwood, Brian**
**Ridge Center**
**Glens Falls, New York 12801-3686 (US)**

(74) Representative : **Haffner, Thomas M., Dr.**
**Patentanwaltskanzlei Dipl.-Ing. Adolf**
**Kretschmer Dr. Thomas M. Haffner**
**Schottengasse 3a**
**A-1014 Wien (AT)**

(54) **Flotation column de-inking of paper during recycling.**

(57)   Deinking of paper having print during the production of recycled paper is accomplished by using a flotation column (15) . A finely comminuted fibrous suspension having a consistency of 2-8% is introduced into a first vertical column (30) to flow downwardly. The suspension passes through a sharp-edge orifice (38) and just below the orifice air (substantially atmospheric or pressurized) is sucked into the suspension and entrained in it. This forms a downwardly moving foam bed. The suspension with entrained air passes from the open bottom (32) of the first column into a second column (33) to form a suspension/froth interface (46) in the second column. Ink particles in the suspension attach to the air bubbles and are entrained in the froth (47). The froth with entrained ink particles is removed from the top (at 50) of the second column and a suspension substantially free of ink particles is removed from the bottom (36) of the second column, and is preferably deaerated (with 52). The sharp edge orifice is preferably circular in configuration with about a 1/2 - 2 inch diameter (39).

EP 0 477 162 A1

FIG. 2

## BACKGROUND AND SUMMARY OF THE INVENTION

In the manufacture of recycled paper, deinking is one of the more important steps. Deinking is conventionally practiced in flotation cells, such as shown in U.S. Patent Nos. 4,157,952 and 4,749,473. Such cells typically require the introduction of air under pressure, and associated compression equipment, and the maximum consistency of pulp typically handled thereby is about one to one and one-half (1 - 1-1/2).

According to the present invention, deinking of paper pulp during the manufacture of recycled paper is facilitated by utilizing a flotation column instead of a flotation cell. A particular flotation column utilized according to the present invention is similar to that disclosed in U.S. Patent 4,938,865, the disclosure of which is hereby incorporated by reference herein. That patent shows a flotation column arrangement and method particularly used for the flotation of minerals suspended in water. Typically mineral ores or the like are ground very finely, and then are subjected to the column flotation process for the beneficiation of mineral ores. That process is also suggested for the removal of oil droplets or emulsified oil particles, as well as for the removal of fibrous or vegetable matter from the suspension, such as the removal of paper fibers and bacterial cells from a suspension.

According to the present invention, it has been found that the apparatus such as disclosed in U.S. Patent 4,938,865 -- with minor modifications -- can be made suitable for the deinking of recycled paper fibrous cellulosic pulp. A method of deinking utilizing columns, instead of flotation cells, according to the invention does not require air to be introduced under pressure, but rather a substantially atmospheric source of air may be provided. Further, flotation may be accomplished with a wider variety of suspension concentrations, e.g. about 1-8% fibrous solids in the pulp slurry.

According to one aspect of the present invention, a method of deinking recyled paper cellulosic pulp is provided utilizing a first generally vertical column and a second generally vertical column cooperating with the open bottom of the first column. The method comprises the steps of continuously: (a) reducing paper having print thereon to a finely comminuted fibrous liquid-solids suspension flow having a low solids consistency; (b) introducing the fibrous suspension into the top of the first column to flow downwardly therein; (c) entraining air (either at substantially atmospheric pressure or pressurized) in the suspension flow in the first column to form a downwardly moving foam bed in the first column; (d) passing the suspension with entrained air from the open bottom of the first column into the second column to form a suspension/froth interface in the second column, ink particles in the suspension attaching to air bubbles and being entrained in the froth; (e) removing the froth with entrained ink particles from the top of the second column; and (f) removing suspension substantially free of ink particles from the bottom of the second column. Steps (b) and (c), according to the invention, are preferably practiced by causing the suspension to flow through a sharp edge orifice (e.g. circular in configuration with a diameter of about 1/2 - 2 inch). When moving downwardly in the first column, the air to be entrained is added only after the suspension has passed through the sharp edge orifice. The rate of air flow into the column below the sharp edge orifice is controlled to thereby control the desired foam bed height in the first column. Preferably the suspension is deaerated after it is removed, and the suspension can have a consistency of 1-8% (e.g. over 1.5%).

The invention also contemplates a method of manufacturing recycled paper comprising the steps of continuously reducing the cellulosic paper having print thereon to a finely comminuted liquid-solid suspension flow having a low solids consistency, screening the suspension to remove reject particles, subjecting the suspension to flotation to effect deinking, washing and thickening the suspension, and making paper from the thickened suspension. The flotation is the column flotation process as recited above.

According to another aspect of the present invention, apparatus is provided for separating ink particles from recycled paper pulp. The apparatus comprising: a first vertically extending column having an upper end and a lower end; means defining a sharp edge orifice in the first column adjacent the upper end thereof; means for supplying air to the first column just below the sharp edge orifice, the air supply means including means for controlling the rate air is supplied into the first column; a second vertically extending column, having an upper end and a lower end, the first column lower end terminating within the second column below the upper end thereof; an overflow weir at the upper part of the second column for removing froth with entrained ink particles therein; and suspension withdrawal means at the lower part of the second column for withdrawing deinked suspension. Deaerating means are preferably connected to the suspension withdrawal means, and the sharp edge orifice has a circular configuration and a diameter of about 1/2 - 2 inch.

It is a primary object of the present invention to provide for the effective and advantageous deinking of recycled paper fibrous cellulosic pulp. This and other objects of the invention will become clear from an inspection of the detailed description of the invention, and from the appended claims.

BRIEF DESCRIPTION OF THE DRAWINGS

FIGURE 1 is a schematic view of a typical system for producing recycled paper, utilizing the flotation/deinking equipment according to the invention;

FIGURE 2 is a diagrammatic cross-sectional elevation of an exemplary form of flotation column utilizable according to the invention; and

FIGURE 3 is a detailed cross-sectional view of the sharp edge orifice preferably utilized in the equipment of FIGURE 2.

DETAILED DESCRIPTION OF THE DRAWINGS

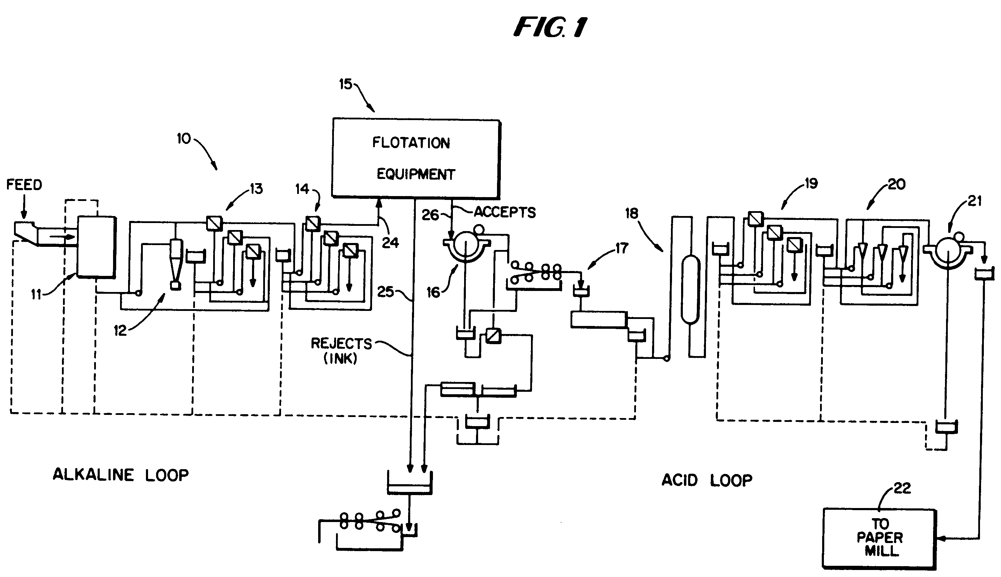

FIGURE 1 illustrates one conventional system for producing recycled paper, the system being illustrated generally by reference numeral 10. The exact sequencing of the components may be changed and some components deleted depending upon the composition of the feedstock, or other parameters.

Used paper, having print thereon which may have a component of virgin wood fiber -- is fed into a conventional pulper 11 which comminutes the cellulosic feed to provide a liquids-solids suspension. The suspension -- which in accordance with the invention -- is diluted to a solids consistency of about 1-8%, passes to one or more high density cleaneis 12, coarse screens 13, fine screens 14, and then to a flotation system 15. The accepts from the flotation system 15 pass to a washer 16, dispersion apparatus 17, an optional bleaching stage 18, fines screens 19, and cyclone cleaners 20, and then is thickened at thickener 21 and discharged to a paper mill 22 where it is formed into recycled paper. The feed of suspension into the flotation system 15 is through inlet 24, while the rejects (e.g. ink particles) pass into conduit 25, and the accepts (pulp) into outlet 26.

During the practice of the recycled paper production procedure, typically the suspension will have a temperature of about 30-60°C (at least in system 15). In dispersion and bleaching the temperature may be as high as 90°C. The liquid for providing the suspension is primarily water, but also may include other chemicals to facilitate separation of the ink from the comminuted paper, or to otherwise enhance the process. For example, as disclosed in patent 4,331,534, hydrogen peroxide, sodium hydroxide, waterglass, and a washing agent (e.g. Soap-Olinor®) and a surfactant may be added directly into the pulper 11, or at another suitable stage.

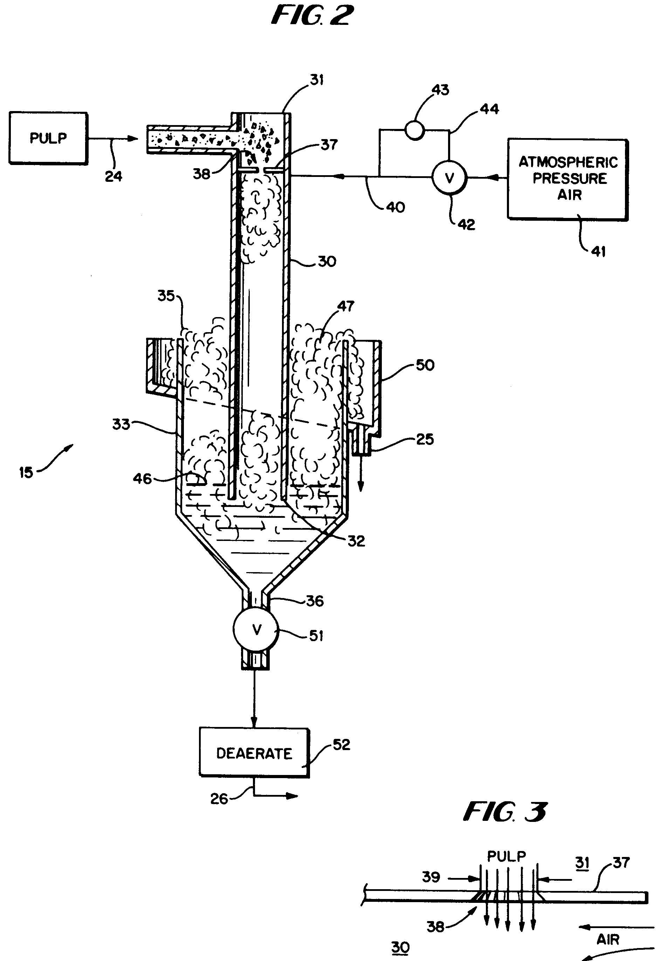

The column flotation system 15 according to the present invention is illustrated schematically in FIGURE 2. The flotation system 15 includes a first column 30 having a top end 31, and an open bottom end 32. A second column 33 is provided in which at least the open bottom end 32 of the first column 30 is disposed. The columns 30, 33 are preferably both substantially vertical, and substantially concentric. The second column 33 has an open top defined by the edge 35, and an outlet 36 at the bottom thereof.

Adjacent the top 31 of the first column 30, where the fibrous suspension inlet 24 is provided, there preferably is a barrier 37 with means 38 in the barrier for reducing the pressure of the suspension across the barrier so that a low pressure area is formed just below the barrier 37, which allows air -- preferably substantially atmospheric air, although pressurized air may be used -- to be entrained in the pulp flowing through the means 38. As illustrated in FIGURE 3, the means 38 preferably comprises a sharp edge orifice, e.g. one that is circular in configuration and has a diameter of about 1/2 - 2 inch. A conventional orifice or nozzle -- such as discussed in U.S. Patent 4,938,865 -- would not be effective for the fibrous suspension that is acted upon according to the invention since it would prevent proper passage of the fibrous slurry and/or quickly clog. The invention can handle fibrous suspensions from about 1-8% solids, specifically at consistencies above conventional recycled paper flotation process (i.e. above 1.5%, e.g. about 2-8%).

In the low pressure zone established just below the barrier 37 in which the sharp edge orifice 38 is formed, a low pressure zone is provided which is in communication with the source 41 of substantially atmospheric pressure air (e.g. just the open environment). The flow rate of the air in the conduit 40 is controlled by a valve 42 operated by a controller 43. Thus, the first column 30 has foam formed therein, the foam filling at least a major portion of the column 30, and preferably substantially up to the barrier 37. This creates a favorable environment for the contact between the air and suspension particles, allowing the ink particles -- which are, or have been rendered, hydrophobic -- to attach to air bubbles.

The foam from the first column 30 passes into the liquid suspension at the bottom of the second column 33, a froth/suspension level 46 being established in the second column 33, the level 46 preferably being slightly above the open bottom 32 of the first column 30. Froth 47 -- comprising air with entrained ink particles -- passes over the upper edge 35 of the first column 33 into weir 50, from which it passes into conduit 25. Meanwhile, the suspension which is substantially free of ink particles passes through the bottom 36 of the second column 33, through a valve 51, and then is preferably deaerated by deaeration equipment 52 before passing in the line 26 to the subsequent equipment illustrated in FIGURE 1.

The particular start-up operation as described in U.S. Patent 4,938,865 can also be utilized in the practice of the present method. Further -- as described in said patent -- it is desirable to link the pressure actuated controller 43 to the valve 42 in such a way that if the pressure inside the top of the first column 30 (just below the barrier 37, for example) drops below a predetermined value as sensed by a sensor connected to the controller 43, the valve 42 is caused to close partially or completely, resulting in the reestablishment of the full bed of dense foam desired in the column 30.

It will thus be seen that according to the present invention a method and apparatus have been provided for effectively deinking recycled fibrous cellulosic (paper) pulp. While the invention has been herein shown and described in what is presently conceived to be the most practical preferred embodiment thereof it will be apparent to those of ordinary skill in the art that many modifications may be made thereof within the scope of the invention. For example, instead of a sharp edge orifice a particularly designed nozzle could be provided that allowed the flow of fiber therethrough and a pressure drop across the barrier 37; also, of course, a multiplicity of orifices or nozzles are also within the scope of the invention rather than the single one described in the preferred embodiment. Thus, the invention is to be accorded the broadest interpretation of the appended claims so as to encompass all equivalent structures and methods.

## Claims

1. A method of deinking recycled paper fibrous cellulosic pulp utilizing a first generally vertical column (30) and a second generally vertical column (33) cooperating with the open bottom (32) of the first column, comprising the steps of continuously: (a) reducing (at 11) paper having print thereon to a finely comminuted fibrous liquid-solids suspension flow having a low solids consistency; and (b) introducing the fibrous suspension into the top (31) of the first column (30) to flow downwardly therein; characterized by:
   (c) entraining air in the suspension flow in the first column to form a downwardly moving foam bed in the first column;
   (d) passing the suspension with entrained air from the open bottom (32) of the first column into the second column to form a suspension-/froth interface (46) in the second column, ink particles in the suspension attaching to air bubbles and being entrained in the froth (47);
   (e) removing the froth (47) with entrained ink particles from the top (35) of the second column (with 50); and
   (f) removing suspension substantially free of ink particles from the bottom (36) of the second column.

2. A method as recited in claim 1 further characterized in that steps (b) and (c) are practiced by causing the suspension to flow through a sharp edge orifice (38) when moving downwardly in the first column, and adding air to be entrained (from 40) in the downwardly moving suspension only after it has passed through the sharp edge orifice.

3. A method as recited in claim 1 or 2 characterized in that step (c) is practiced by controlling the rate (through 42, 43) of air flow into the column below the sharp edge orifice, to thereby control the desired foam bed height in the first column.

4. A method as recited in claim 1, 2 or 3 characterized by the further step of deaerating the suspension (at 52) removed in step (f).

5. A method as recited in claim 3 further characterized in that said step of controlling the rate of air flow is practiced by sensing the air pressure within the first column below the sharp edge orifice (38), and controlling the air flow in response to the sensed pressure.

6. A method as recited in any of the claims 1 to 5 characterized in that steps (b) and (c) are further practiced by passing the suspension through a sharp edge orifice (38) having a circular configuration about 1/2 - 2 inch in diameter.

7. A method as recited in any of the claims 1 to 6 characterized in that step (a) is practiced to provide the suspension of any solids consistency of 2-8%.

8. A method as recited in any of the claims 1 to 7 characterized in that steps (b) and (c) are practiced so as to cause the foam bed to fill a major portion of the first column (30), and characterized by the further step of controlling the suspension-/froth interface (46) in the second column (33) so that it is maintained above the lower end (32) of the first column.

9. A method of manufacturing recycled paper, comprising the steps of continuously: reducing (at 11) cellulosic paper having print thereon to a finely comminuted liquid-solids suspension flow having a low solids consistency; screening (at 13, 14) the suspension to remove reject particles; subjecting the suspension to flotation (at 15) to effect deinking of the cellulosic content of the suspension, to produce a deinked pulp; washing and thickening the pulp (at 16, 21); and making paper (at 22) from the thickened pulp; wherein said flotation step is practiced by using a first generally vertical column (30) and a second generally vertical column (33) cooperating with the open bottom (32) of the first column, and comprises the step of: introducing the fibrous suspension into the top (31) of the first column to flow downwardly therein; and characterized by:

entraining air in the suspension flow in the first column to form a downwardly moving foam bed in the first column; passing the suspension with entrained air from the open bottom of the first column into the second column to form a suspension/froth interface (46) in the second column, ink particles in the suspension attaching to air bubbles and being entrained in the froth (47);

removing the froth (47) with entrained ink particles from the top (at 50) of the second column; and

removing suspension substantially free of ink particles from the bottom (36) of the second column.

10. Apparatus for separating ink particles from recycled paper pulp, comprising: a first vertically extending column (30) having an upper end (31) and a lower end (32); a second vertically extending column (33), having an upper end (35) and a lower end (36), said first column lower end terminating within said second column below the upper end thereof; an overflow weir (50) at the upper part of said second column for removing froth; and suspension withdrawal means (51) at the lower part of said second column for withdrawing suspension; and characterized by

means defining a sharp edge orifice (38) in said first column adjacent said upper end thereof;

means (40-44) for supplying air to said first column just below said sharp edge orifice, said air supply means including means (42, 43) for controlling the rate air is supplied into said first column; and

deaerating means (52) connected to said suspension withdrawal means.

FIG. 1

# FIG. 2

# FIG. 3

EP 0 477 162 A1

European Patent
Office

**EUROPEAN SEARCH REPORT**

Application Number

EP    91 89 0178

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | US-A-4 938 865 (JAMESON) <br> * whole document * | 1,8 | D21C5/02 |
| A | | | |
| D,A | US-A-4 157 952 (KROFTA) <br> * whole document * | | |
| A | US-A-4 147 616 (BALCAR ET AL.) <br> * column 3, line 9 - column 4, line 54 * | | |

TECHNICAL FIELDS
SEARCHED (Int. Cl.5 )

D21C

The present search report has been drawn up for all claims

| Place of search | Date of completion of the search | Examiner |
|---|---|---|
| THE HAGUE | 12 DECEMBER 1991 | HOPKINS S.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9